# EUROPEAN PATENT APPLICATION

(11) **EP 1 158 794 A1**
(43) Date of publication of application: **28.11.2001**
(21) Application number: 01401060.7
(22) Date of filing: 25.04.2001
(51) Int. Cl.: H04N 5/445

(54) **Process for dynamic navigation among multimedia documents and multimedia terminal therefore**

(30) Priority: 19.05.2000 FR 0006421
(71) Applicant: THOMSON multimedia, 92100 Boulogne Billancourt (FR)
(72) Inventor: Chevallier, Louis, 92648 Boulogne Cedex (FR); Shao, Jiang, 92648 Boulogne Cedex (FR); Tazine, Nour-Eddine, 92648 Boulogne Cedex (FR)
(74) Representative: Kohrs, Martin

(57) **Abstract**

The present invention concerns a process for dynamic navigation with the help of a user interface. Navigation is performed within a tree structure composed of several levels, each level representing categories of multimedia documents.

The invention consists of a process enabling a user to formulate a new navigation structure upon each command by modifying the ordered list of levels. The user interface constantly displays the structure of a navigation tree, the list of classification elements accessible from the current level and the list of documents accessible from the current level.

The invention also relates to a multimedia terminal able to receive a tree structure and to send signals for displaying a representation of this tree, and equipped with means of dynamic modification of its structure.

## Description

The invention relates to a process for navigating among multimedia documents accessible with the help of a multimedia terminal with the help of a user interface and to a multimedia terminal for implementing the process. The invention applies in particular in the case where descriptive data pertaining to the multimedia documents are available.

A user interface uses these descriptive data to formulate menus which can be displayed on the screen of the television, thus enabling the user to choose the multimedia documents. Patent application FR96/09679 filed by the applicant describes a process for selecting television programmes and a device incorporating a graphics interface enabling the user to navigate through lists of programmes. The menus enable the user to ascertain the general content of an audio-visual transmission and thus to select the latter according to his tastes. The descriptive data, called "service information" in the standard relating to DVB-SI, are stored in a local database and constantly updated as a function of the documents accessible on the network. The elements of the data base are grouped together according to certain criteria contained in the service information, such as: topic, language, rating level, etc.

However, these user interfaces are static navigation interfaces, in the sense that the hierarchy of the elements through which one is navigating remains constant throughout their use, even during their entire life cycle. In general, the hierarchy of the elements displayed by a static user interface is designed and fixed at the time of its design, once and for all. To access the same elements, such as the control functions, the TV programmes, etc., the user always navigates through the same menus, the same dialogues, etc., doing so in the same order.

An improvement to static user interfaces is the configurable user interface. Patents US5,694,176 (MARTZ) published on 2 December 1997 and EP 623 870 (IBM) published on 9 November 1994 present interfaces for navigating through a structure. According to this prior art, the user selects attributes for each level of the structure and thus to filter the multimedia documents according to the attributes selected. However these interfaces, although configurable, remain static and do not allow the organisation of the levels of the navigation structure to be adapted to the tastes of the user.

The introduction of digital network has seen the appearance of mass storage means, digital TV decoders also permitting access to Internet type networks in homes. Tomorrow's user will be faced with a very considerable quantity of multimedia documents of various types, such as audio, videos, pictures, text, application/services, etc. User interfaces must hence forth enable the user to navigate through such multimedia databases and to find the documents that the user desires, and to do so in an effective and user-friendly manner.

The invention proposes a new dynamic user navigation interface concept which offers navigation and more effective and user-friendly possibilities of searching for multimedia documents.

The subject of the invention is a process for navigating and for selecting multimedia documents in a terminal equipped with a display device and comprising a step of receiving descriptive document data, the said descriptive data comprising classification elements for indexing the documents into document categories, the process is characterised in that it comprises the following steps:
- displaying of a first navigation tree structure with identification of a current level in the tree, the said tree structure comprising an ordered list of levels corresponding to indexing categories and for each level, a set of classification elements,
- instigating of a command for modification by the user of the tree structure displayed,
- in response to the command, construction of a second tree structure comprising a new ordered list of levels, and displaying of the new navigation tree structure.

In this way, the process makes it possible to formulate a new navigation structure for each command performed by the user. This navigation structure is called the "navigation tree". The user navigation interface displays on the screen the hierarchy of the elements of the tree and a selection of documents which is better suited to the user's preferences.

According to an improvement, the user can, independently, modify the hierarchy of the levels of the navigation tree and the list of classification elements associated with each level.

According to another improvement, the new dynamic user interface makes it possible to navigate through the newly formulated navigation tree. Another improvement consists in that during navigation, the new user interface dynamically and constantly displays the multimedia documents associated with the current level of the navigation tree. Specifically, a navigation command constitutes a request to search for the documents corresponding to the current position in the tree.

The subject of the invention is also a multimedia terminal comprising a central unit, a means of receiving multimedia documents and descriptive data, a means of transmitting data intended for display, the said descriptive data comprising classification elements for indexing the documents according to categories, and a means of activating the said documents, characterised in that it comprises a means of displaying a first structure of navigation tree stored in the terminal, the said tree structure comprising an ordered list of levels corresponding to indexing categories and for each level, a set of classification elements, and a command for modifying the structure of the tree consisting in modifying the ordered list of levels, the command automatically triggering the display means for the updating of the structure displayed.

Other characteristics and advantages of the invention will become apparent through the description of a particular exemplary embodiment described with reference to the drawings among which:

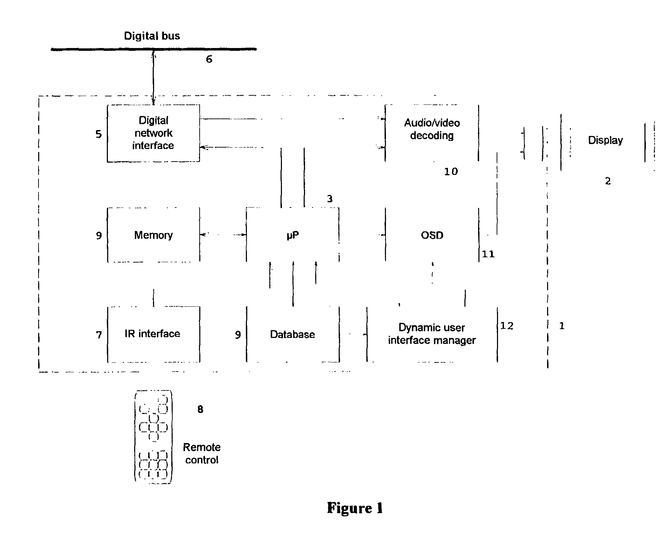

- Figure 1 is a block diagram of a multimedia terminal for the implementation of the invention,
- Figure 2 is an example of the appearance of a screen generated by the navigation system when it is instigated,
- Figure 3 is an example of the appearance of a screen generated by the navigation system following a filtering command for modifying the navigation tree,
- Figure 4 is an example of the appearance of a screen generated by the navigation system after a move command,
- Figure 5 is an example of the appearance of a screen generated by the navigation system after a command for modifying the classification elements of the current level,
- Figure 6 is an example of the appearance of a screen generated by the navigation system after a command for modifying the classification elements according to a particular case of current level,
- Figure 7 is a schematic of a navigation tree,
- Figure 8 is an example of the appearance of a screen generated by the navigation system for navigation through the tree represented in Figure 7,

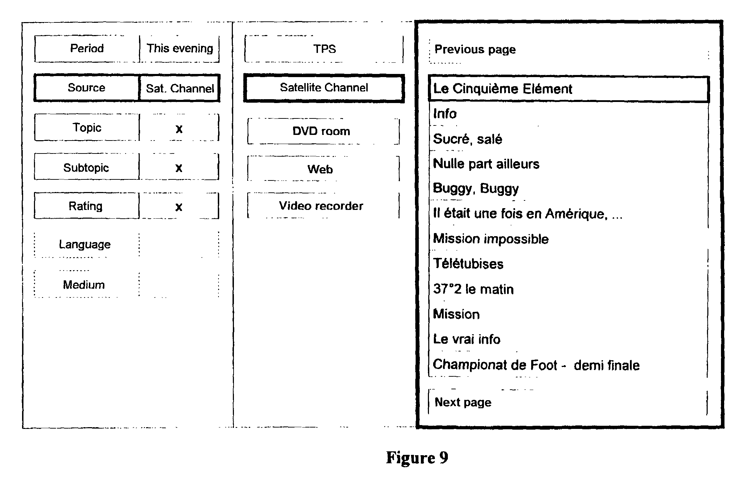

- Figure 9 is an example of the appearance of a screen generated by the navigation system for the selecting of documents.

The manner of operation of a multimedia terminal (1) equipped with a display device (2) will firstly be described. The terminal comprises a central unit (3) linked to a program memory (4), and an interface (5) for communication with a high bit rate digital network (6) making it possible to transmit audio/video data in real time. This network is for example an IEEE 1394 network. The terminal furthermore comprises an infrared signals receiver (7) for receiving the signals from a remote control (8), a memory (9) for storing a database, and audio/video decoding logic (10) for creating audio-visual signals sent to the television screen (2). The remote control is furnished with navigation buttons ↑, ↓, → and ← and buttons: "OK", "Insert", "Move" and "Delete" of its remote control.

The terminal also comprises a circuit 11 for displaying data on the screen, often called the OSD circuit, the initials standing for "On Screen Display". The OSD circuit (11) is a text and graphics generator which enables menus and pictograms (for example, a number corresponding to the station displayed) to be displayed on the screen and which enables the navigation menus in accordance with the present invention to be displayed. The OSD circuit receives information from the Central Unit and from the GIUD module (12). The GIUD is advantageously made in the form of a programme module recorded in a read only memory.

The digital bus (6) sends the terminal data comprising multimedia documents and descriptive data pertaining to these documents. The descriptive data comprise the attributes of the multimedia documents accessible by the digital bus. They are stored in the database of the memory (9) of the terminal and are continually updated during new receptions. The GIUD module then extracts the information from this database and processes this information so as to produce the navigation menus displayed on the screen and proposed to the user.

In the example which follows, the multimedia documents are indexed according to six categories. The six categories and associated classification elements are as follows:
- Language: English, French, German, Italian, Arabic, others
- Topic: film, information, documentary, sport, game/show.
- second level of topic: subtopic:
   - film: {adventure, drama, erotic, detective story, fiction, others}
   - information: {news, radio, weather forecast, stock market, sport, other}
   - documentary: {general, nature, culture, social, history}
   - game/show: {general, variety, circus, talk show, circus, theatre}
   - sport: {general, football, tennis, basketball, athletics, water sports}
   - ...
- Source: TPS, Satellite Channel, DVD room, video recorder, Web.
- Period (time of availability) : Monday, ..., Sunday, this morning, this afternoon, this evening,
- Rating: 0 (any audience), 1, ...., 3 (pornographic).
- Medium: audio, video, picture, text.

It was stated earlier that the attributes give classification information pertaining to the multimedia documents. These attributes contain one or more values for each of the six categories. Here, for example, the classification values associated with the attributes of the cartoon "Peter Pan":
- Medium: video.
- Period: Wednesday, Saturday, this evening.
- Rating: 0 (any audience).
- Topic: film/others.
- Language: French.
- Source: Satellite Channel.

Of course, other documents referenced with the same attribute values may be found. It will be observed that one and the same document may possess several values for one and the same attribute, this document then belonging to several classification groups. For example, this cartoon appears in the documents accessible on Wednesday, Saturday and also this evening.

According to the present invention, the user defines the navigation tree structure by ordering the categories according to his preferences. When the terminal is switched on for the first time, it contains no user-defined search filter. The GIUD module defines a document request and a default structure. The first navigation structure which is formulated by the GIUD module can also take into account the profile of the user, the ordered list of levels comprising first the user's preferred levels. The GIUD module constructs a first navigation tree and proposes it to the user. The user can in this way navigate as soon as the terminal is brought into service, through this first navigation tree. Subsequently, the user modifies the request and/or the navigation tree structure. Subsequently, the GIUD module constructs a new navigation tree according to the search filter defined by the user, and displays menus in accordance with this latest navigation tree. The navigation tree comprises at least six levels corresponding to the six categories described earlier.

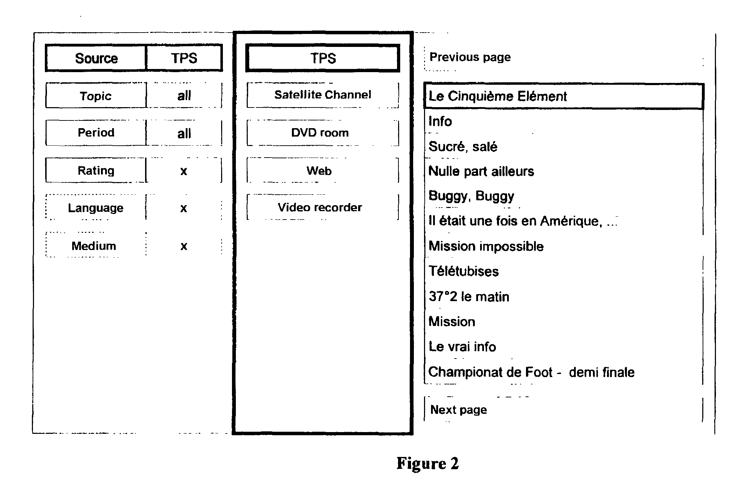

Figure 2 presents an example of a menu enabling the user to navigate through the navigation tree by way of a menu. This menu appears on the screen when the GIUD module is instigated. It comprises three columns:
- The first column (on the left), the so-called "Filtering Column", shows the various levels of the navigation tree in the form of rectangular icons. The name of the category is displayed at the centre of the icon. The first level which is located at the top of the column corresponds to the level situated immediately under the root of the tree. The levels follow one another underneath in the order of the navigation tree. This first column makes it possible to modify the request for documents and the structure of the navigation tree. It also makes it possible to signal the current level of the navigation through the tree.
- The second (in the middle), the so-called "Navigation Column", is used for navigation through the tree constructed according to the search filter defined by the user in the filtering column. This second column makes it possible to display the classification elements associated with a level of the tree so that the user can select one according to his preferences.
- The third (on the right), the so-called "Documents Column", shows the multimedia documents accessible from the current level displayed in the filtering column, and which have as attributes the classification element selected in the navigation column.

On instigating the GIUD module, the navigation column is the selected column. Each column contains a selected element which becomes the current element if the user selects its column. An element which was previously selected before a change of column will become reselected when its column is selected again.

The selected column and the selected element are visually highlighted with respect to the others, for example by a thicker framing, another colour, bold or fatter characters, and/or a particular background tint for the framing, ... etc. Likewise, the pre-selected elements are also graphically highlighted.

The user changes column with the help of the ← and → buttons of the remote control; within the selected column, the user selects the elements with the help of the ↑ and ↓ buttons of the remote control.

In the example of the menu of Figure 2, the navigation column is the selected column. In this column, TPS is the active element. The construction rule used for the navigation tree contains the categories ordered in this way:
1° Source
2° Topic
3° Period
4° Rating
5° Language
6° Medium

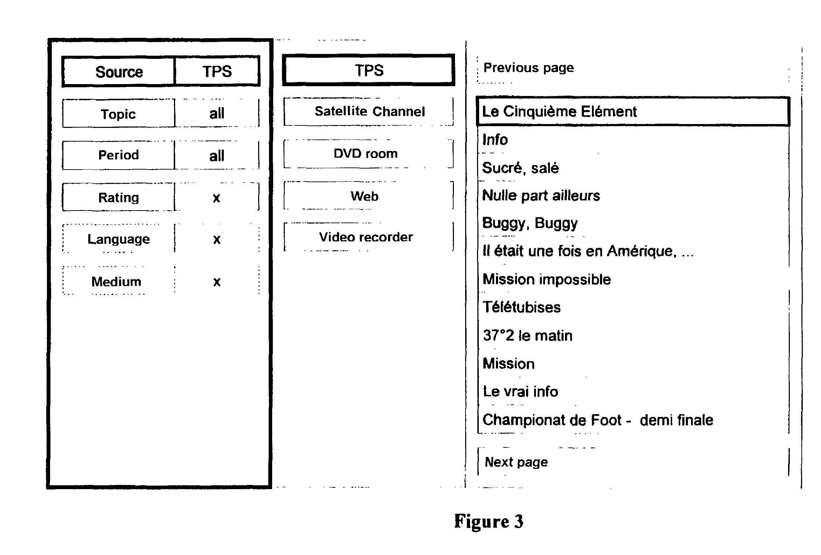

Figure 3 presents the menu displayed by the GIUD module when the filtering column is selected, following the pressing of the ← button from the state presented in Figure 2. In this menu, the user can modify the navigation tree by formulating new search filters. To do this he uses the buttons of the remote control. In this menu, the ↑, ↓, → and ← navigation buttons, the "Delete", "Move", "Insert", "OK" buttons are operational.

When a category used in the navigation tree construction rule is selected, an action by the user on the "Delete" button excludes the category from the navigation tree structure. Therefore, the icon of this category is put right at the bottom of the filtering column and is visually marked out. Henceforth, this icon can no longer be accessible when the navigation column is selected (navigation menu). In the example of Figure 3, it is surrounded by dots. The active element is the one which was immediately underneath the one which has just been deleted. To incorporate an unused category into the construction rule, the user selects it with the ↑ and ↓ buttons and presses the "Insert" button. The category is again incorporated into the navigation tree, in last position. If this category has more than one level, for example the Topic category, an action on the "Insert" button allows insertion into the tree if the number of levels already used in the rule is less than the total number of levels of the category.

The place of a category in the navigation tree is modified as follows. Pressing the "Move" button with a category selected causes the icon of this category to flash. The user can then move around with the ↑ and ↓ buttons and choose the level into which he wishes to insert this category. The insertion is confirmed by pressing the "OK" button.

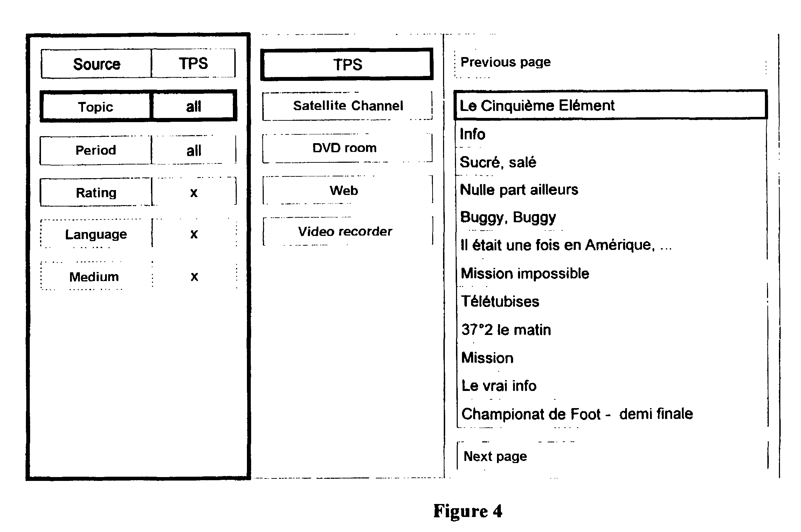

Pressing the "OK" button with a category selected affords access to the menu making it possible to define the search criteria corresponding to this category, that is to say the list of classification elements for this category. That is how the user makes his selection. Let us assume that from the menu presented in Figure 3, the user presses once on the ↓ button so as to select the "Topic" category, as shown in Figure 4. The user then presses once on the "OK" button so as to confirm the entry into the menu for selecting the classification elements.

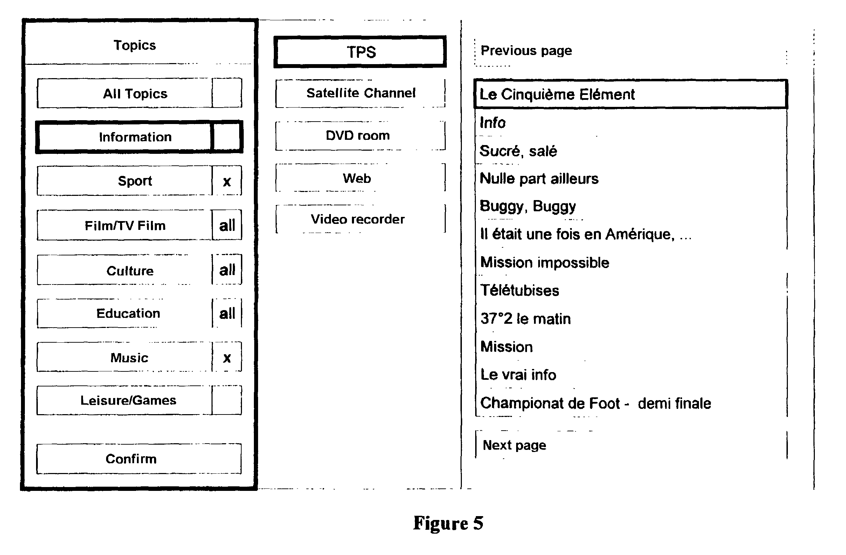

The menu of Figure 5 appears, the filtering column contains the classification elements for the "Topic" category as well as the "Confirm" and "All Topics" icons. The later icon enables the user not to exclude any topic. By confirming this element, all the topics are included in the request for documents which are selected regardless of their topics. By navigating with the help of the ↑ and ↓ buttons, the user can select each element by marking it out visually. By pressing on the "Delete" button, he excludes this element from the request for documents, and the right part of this element is then empty. By pressing on the "Insert" button, he includes this element in the request for documents, and the right part of this element contains a cross (x).

The "Confirm" icon at the bottom of the filtering column makes it possible to confirm the selection of topics. The activating of this icon causes a return to the menu of Figure 2. If the "All Topics" icon has been selected, the symbol "All" is displayed in the right part of the "Topic" icon of the filtering column.

The "Topic" category is a particular case since each element of this category is itself a category. In this instance, when the user selects a topic, the GIUD module can propose several subtopics to him. Thus, if the "Sport" icon is selected and if the user presses the "OK" button, the GIUD module proposes that he individually select the elements of the "Sport" subtopic of the "Topic" category. The menu of Figure 4 then appears. The "Source" category could also have been decomposed into two levels, the first corresponding to the programme bouquets and the second to the programmes. This decomposition can be appreciable when numerous programmes are available, for example more than a hundred.

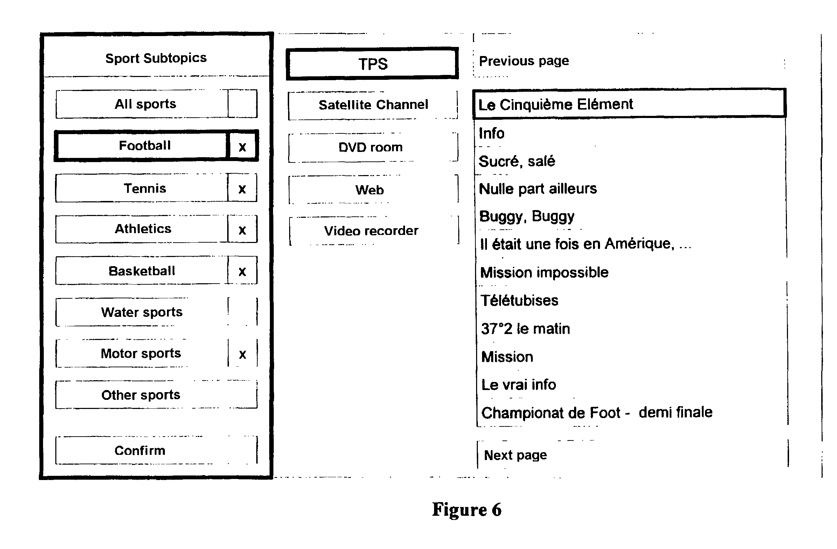

In the menu of Figure 6, the filtering column contains the elements of the "Sport" subtopic. As before, the user can select all the elements (via the "All Sports" icon). He can also individually include and exclude each sports category in the request for documents with the help of the "Insert" and "Delete" buttons. The "Confirm" icon at the bottom of the filtering column makes it possible to confirm the selection of subtopics. The activating of this icon causes a return to the menu of Figure 4. If the user has previously selected the "All Sports" icon, the right part of the icon corresponding to sport contains the word "All". In the example of Figure 5, this is the case for the "Film", "Culture", "Education" subtopics. If the user has previously selected only part of the subtopics, the right part of the icon contains a cross (X) . This is the case for the "Music" and "Sport" topics. If the user has not selected any subtopic, these amounts to not selecting this topic, so the right part is empty.

When the user confirms the selection of the topic by actuating the "Confirm" icon, the GIUD module returns to the menu of Figure 4 while updating the right part of the element corresponding to the category.

With the help of the menus described earlier in Figures 5 and 6, the user can modify the search criteria for all the classification categories.

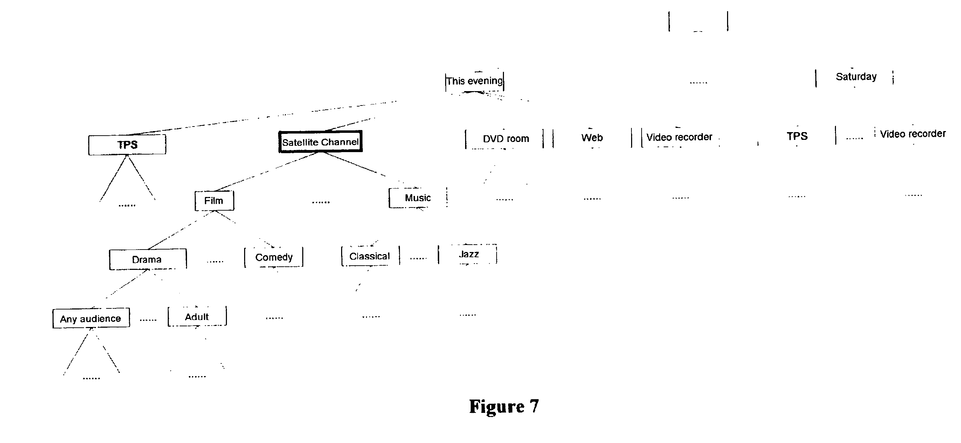

Figure 7 shows an exemplary navigation tree and the current state of navigation through this tree. Under the root, the first level corresponds to the "Period" category; the second level corresponds to the "Source" category; the third and fourth levels correspond to the "Topic" category; and the fifth level corresponds to the "Rating" category. In this tree, the current position of navigation is the "Satellite Channel" node of the "This evening" branch under the root. This node, framed in Figure 7, is called the "current node". It corresponds to the current level of the tree.

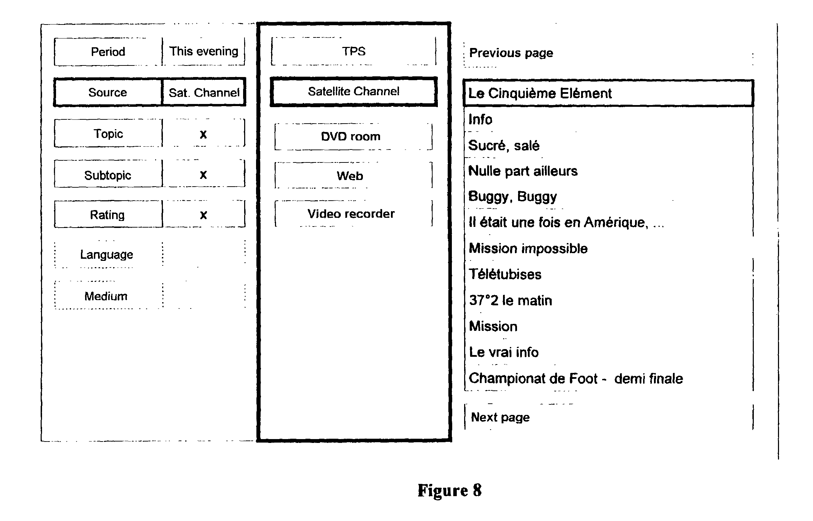

Figure 8 shows the user interface when the user simply desires to navigate through the navigation tree which he has just for example created and such as is represented in Figure 7. The navigation column of Figure 8 displays the classification elements associated with the current level. The filtering column depicts the categories in the order of traversal of the tree. It shows the path traversed by navigation starting from the root (at the top) so as to arrive at the current node. From the top to the bottom, the first "Period" level displays "This evening", the second "Source" level displays "Satellite Channel", which is also highlighted in the navigation column. The documents column displays the multimedia documents associated with the current node. These documents correspond on the one hand to the document search criteria expressed in the request for documents, and on the other hand to classification elements selected at this level of the tree. In the example, the documents column displays all the documents which comply with the user's search expressed in the request for documents, and which are available both "This evening" and on "Satellite Channel".

In the navigation column, the user navigates between the current level and its adjacent levels with the help of the ↑ and ↓ buttons. To go down one level in the next tree by selecting the classification element highlighted in the navigation column, the user presses the "OK" button. To go up one level, the user can select a "Return" icon, not represented in Figure 8, then press the "OK" button. Another approach consists in configuring a button entitled "Return" on the remote control. With each navigation action, the list in the documents column is updated, as is the navigation state presented in the filtering column. From this menu, the user can return to the filtering column with the help of the ← button or go to the right-hand column so as to select a multimedia document by pressing the → button.

An improvement consists in jumping by several levels for one and the same command when, together, they offer the user only a single choice, that is to say they contain only a single classification element. For example, if from a certain level of the tree onwards, all the documents are in French, the choice of language is not in fact a filtering criterion, since the number of documents remains the same. Therefore, the documents list associated with the "Language" level and the list of the level situated immediately above are identical. If the level above "Language" is the current one, a downward navigation command will not select the "Language" level as the current level, but the level immediately below. As in the case of the "Language" level, this level is displayed only if it is associated with more than one classification element, otherwise it is the level below which is displayed, and so on and so forth, the navigation command in this case performing a jump of three or more levels. Likewise, the branches which do not contain documents are not displayed to the user.

This improvement is achieved with the help of the application of two optimisation algorithms to the navigation tree, in the order
- deletion of branches which contain no document, and
- elimination of internal nodes, which have no brother node. When such a node is eliminated, all its child nodes become the child nodes of the father node of the eliminated node.

Starting from the navigation column, the user presses once on the → button of the remote control so as to select the right-hand column. The menu of Figure 7 then appears. By navigating with the help of the ↑ and ↓ arrows, the user can select a document. By actuating the "OK" button of this remote control, the document is activated. If this is an audio-visual transmission, it is then displayed and one exits the GIUD module. If this is a programme or an interactive service, it is then executed. If the document is not currently accessible, the GIUD module displays a message indicating unavailability and offers the user the possibility of programming an automatic recall of this document when it becomes accessible, automatic recording of the document, etc.

In the documents column, if the number of documents exceeds the display capacity of the column, the "Previous Page" and "Next Page" icons appear at the top and at the bottom. The documents are then displayed blockwise one page at a time.

With the help of the menus presented, the user can redefine the document search criteria for each category (Figures 3 and 4) and/or the navigation structure according to his preferences (Figure 10). The search filter, and hence the navigation tree, can be modified at any time during the navigation by the user, either to refine the search and/or the navigation structure (by eliminating for example classification elements), or to completely change the search strategy. Each time a new search filter is defined, a new navigation tree is constructed by the GIUD, and the navigation by the user takes place in the new tree.

When the navigation tree is modified, it is important to guarantee the user continuity of navigation. This is especially important in the case where the user's aim is to improve the search and/or the navigation structure. Indeed, he should not be compelled to repeat the navigation starting from the root of the tree. For example, when the user arrives at an internal node of the tree, it may transpire that the category used for the level immediately below gives an unsatisfactory distribution of documents.

So, he can ask to change category for this level. When the modification is made, it is entirely natural for the user to be faced with classification elements of the new category used.

In order to guarantee continuity of navigation, certain constraints regarding dynamic filter modification need to be complied with. The following operations guarantee continuity of navigation:
- modifying the tree construction rule (adding a level, deleting a level, changing level of a category) for the levels below the current navigation level, or
- adding new document search criteria to the request without modifying the tree construction rules.

When the user performs a filter modification which does not guarantee continuity of navigation, the system signals this to him. When the new tree is constructed, the system uses the following algorithm to position the new current node in the new tree as close as possible to the former node in the former tree:
- with each navigation action by the user, the system notes the course of the current node as being the run of classification elements associated with all the nodes between the root and the current node,
- when a category is deleted or moved by a level between the root and the current node, the corresponding classification element is deleted from the course of the former current node,
- the new current node is the node whose course is the longest run which is identical to the start of the modified course of the former current node.

The present invention enables the user to construct his own user navigation interface structure by defining his own search filter. Advantageously, the multimedia terminal systematically stores in a nonvolatile memory the latest search filter defined by the user. In this way, when it is instigated, the GIUD module takes up the same configuration as during the latest use. A variant consists in employing a button entitled "Store" allowing this storage. The configuration set in place during the instigating of the module is then that which the user has stored manually. An improvement consists in the module storing the latest search filters and, with the help of a statistical processing, determining the one whose components are most often used. It is this search filter which will be proposed during the next use of the module.

It is important to note that the user interface just described can be used in any multimedia terminal in so far as this terminal possesses audio and video capabilities which are sufficiently effective to enable a user to see and/or listen to multimedia documents.

## Claims

1. Process for navigating and for selecting multimedia documents in a terminal equipped with a display device and comprising a step of receiving descriptive document data, the said descriptive data comprising classification elements for indexing the documents into document categories, the process is **characterised in that** it comprises the following steps:
- displaying of a first navigation tree structure with identification of a current level in the tree, the said tree structure comprising an ordered list of levels corresponding to indexing categories and for each level, a set of classification elements,
- instigating of a command for modification by the user of the tree structure displayed,
- in response to the command, construction of a second tree structure comprising a new ordered list of levels, and displaying of the new navigation tree structure.

2. Process according to Claim 1, **characterised in that** it comprises, in response to the modification command, a step of determining a new current level in the new tree structure.

3. Process according to Claims 1 or 2, **characterised in that**, in response to a navigation command, it furthermore comprises a step consisting in changing the current level without changing the structure of the tree displayed.

4. Process according to Claim 3, **characterised in that** the navigation command consists of a movement by at least one level, the navigation command bringing about movement over more than one level when the set of documents associated with the level adjacent to the current one in the direction of navigation indicated by the command is identical to the current one.

5. Process according to Claim 3, **characterised in that** the modification command comprises a step of formulating a new set of classification elements which is associated with the current level.

6. Process according to one of the Claims 1 to 5, **characterised in that** the displaying step comprises a step of determining the categories most often involved in the commands, the structure of tree displayed presenting in the first levels the categories most often involved.

7. Process according to one of the Claims 1 to 6, **characterised in that** the descriptive data comprise data for identifying the documents and **in that** the process furthermore comprises a step of displaying the said data identifying the documents whose descriptive data belong to the sets of elements of the current level and of those situated above, if any.

8. Process according to Claim 7, **characterised in that** it comprises, in response to a navigation command, a step of selecting a data item identifying a document and, in response to an activation command, a step of activating the selected document.

9. Multimedia terminal comprising a central unit (3), a means of receiving multimedia documents and descriptive data (5), a means of transmitting data intended for display (10), the said descriptive data comprising classification elements for indexing the documents according to categories, and a means of activating the said documents, **characterised in that** it comprises a means (12) of displaying a first structure of navigation tree stored in the terminal, the said tree structure comprising an ordered list of levels corresponding to indexing categories and for each level, a set of classification elements, and a command for modifying the structure of the tree consisting in modifying the ordered list of levels, the command automatically triggering the display means for the updating of the structure displayed.

10. Multimedia terminal according to Claim 9, **characterised in that** it comprises a means of highlighting a so-called current level in the structure of the tree, the modification command acting from this current level.

11. Multimedia terminal according to Claims 9 or 10, **characterised in that** it furthermore comprises a means of navigation for changing the current level displayed in the structure, the said means receiving navigation commands.

12. Terminal according to Claim 11, **characterised in that** it comprises a means of comparison of the list of documents associated with the level adjacent to the current one in the direction of navigation indicated in a navigation command, and of the list of documents associated with the current level, the said means of comparison being activated upon activation of the navigation command, in the case of an identity of the lists, the navigation command bringing about navigation through at least two levels.

13. Multimedia terminal according to one of the Claim 9 to 12, **characterised in that** it furthermore comprises a means of selecting classification elements so as to determine a set composed of new elements associated with the current level.

14. Multimedia terminal according to one of the Claims 9 to 13, **characterised in that** it furthermore comprises a means of displaying the data identifying the documents whose descriptive data belong to the sets of elements of the current level and of those situated above, if any.

15. Multimedia terminal according to Claim 14, **characterised in that** it furthermore comprises, a means of navigation so as to select a displayed data item for identifying documents.

16. Multimedia terminal according to Claim 15, **characterised in that** it comprises a means of activating the document identified by the selected identification data item.
